# EUROPEAN PATENT SPECIFICATION

(11) **EP 3 817 884 B1**
(45) Date of publication and mention of the grant of the patent: **26.10.2022**
(21) Application number: 19746164.3
(22) Date of filing: 20.06.2019
(51) Int. Cl.: B23K 9/013, B23K 9/16, B23K 9/32, G05G 1/30

(54) **WELDING AND/OR CUTTING SYSTEM WITH ACTUATOR UNIT**
SCHWEISS- UND/ODER SCHNEIDVORRICHTUNG MIT EINER AKTUATOREINHEIT
SYSTÈME DE SOUDAGE ET/OU DE COUPAGE AVEC UNE UNITÉ D'ACTIONNEUR

(30) Priority: 05.07.2018 IT 201800006962
(43) Date of publication of application: 12.05.2021
(73) Proprietor: Trafimet Group S.p.A., 36020 Castegnero (VI) (IT)
(72) Inventor: IMI, Attilio, 33010 Pagnacco (UD) (IT)
(74) Representative: Ziliotto, Tiziano
(86) International application number: PCT/IB2019/055206
(87) International publication number: WO 2020/008290

(56) References cited:
- WO-A1-2015/151051
- US-A1- 2011 106 068
- US-A1- 2011 248 009
- US-A1- 2014 144 898
- US-B1- 6 420 680

## Description

More specifically, it is an object of the present invention to provide a welding and/or cutting system in which the control unit makes it possible to reduce the complexity inherent to the management of the signals generated when it is activated.

It is another object of the present invention to provide a welding and/or cutting system in which the control unit makes it possible to reduce the complexity inherent to the construction of the system.

It is a further object of the present invention to provide a welding and/or cutting system that makes it possible to reduce production and/or maintenance costs. Welding systems of the prior art are known from documents US 2011/248009 A1, WO 2015/151051 A1 (basis for the preamble of claim 1),

US 6 420 680 B1 and US 2014/144898 A1. A pedal for a surgical equipment is known from document US 2011/106068 A1.

### SUMMARY

The present invention intends to provide a welding and/or cutting system as defined in claim 1, equipped with a control unit comprising a power supply unit constituted by an electric energy generator.

Preferably, the electric energy generator comprises an induction generator.

Preferably, the electric energy generated in the form of a voltage pulse is preferably rectified and made available to a voltage regulator, so that it can be used as power supply voltage for said wireless signal transmission unit. Preferably, the system furthermore comprises a protection unit for the operator, comprising a protection shield, preferably an LCD filter.

Preferably, the protection unit can be activated through an activation signal.

Preferably, the protection unit comprises a wireless signal reception unit.

Preferably, the first generation means are activated by the movable element during its movement, in such a way as to generate a first signal.

Preferably, the first signal generated by the control unit corresponds to an activation signal designed to activate the protection unit.

Preferably, the control unit comprises second generation means suited to generate a signal and activated by the movable element, wherein the first generation means and the second generation means are activated in sequence by the movable element during its movement, in such a way that the second generation means generate a second signal with a predetermined delay with respect to a first signal generated by the first generation means.

Preferably, the first generation means comprise a first switch and/or the second generation means comprise a second switch.

Preferably, the first switch is activated at the end of a first stroke of the movable element and the second switch is activated at the end of a second stroke of the movable element, said second stroke being longer than said first stroke.

Preferably, the first stroke defines the extent of the movement of the movable element from its rest position to the position of activation of the first switch and the second stroke defines the extent of the movement of the movable element from its rest position to the position of activation of the second switch.

Preferably, the first signal and the second signal are generated by the first generation means and by the second generation means, respectively, during the movement of the movable element in a first activation direction.

Preferably, the second generation means and the first generation means are activated in sequence by the movable element during its movement in a second release direction opposite the first activation direction, in such a way that the first generation means generate a fourth signal with a predetermined delay with respect to a third signal generated by the second generation means.

Preferably, the first switch and/or the second switch comprise a mechanical switch.

Preferably, the first switch and/or the second switch comprise a magnetic switch. Preferably, the movable element comprises a lever.

Preferably, the first signal generated by the control unit corresponds to a signal designed to activate the protection unit and the second signal generated by the control unit corresponds to a signal designed to activate the generator, wherein the protection unit comprises wireless signal transmission/reception means and the generator comprises wireless signal transmission/reception means.

Preferably, the power supply unit is not provided with batteries and/or external power supply devices.

### BRIEF DESCRIPTION OF THE DRAWINGS

Further advantages, objects and characteristics, as well as further embodiments of the present invention, are defined in the claims and will be illustrated in the following description, with reference to the enclosed drawings; in the drawings, corresponding or equivalent characteristics and/or components of the present invention are identified by the same reference numbers. In particular, in the drawings:
- Figure 1 shows a schematic view of a welding and/or cutting system according to an example not covered by the present invention;
- Figure 1A shows an element of the system shown in Figure 1 isolated from the rest;
- Figure 2 shows another element of the system shown in Figure 1 isolated from the rest;
- Figure 3 shows the element of Figure 2 in a specific operating position;
- Figure 4 shows the trend of some signals related to the operation of the system of Figure 1;
- Figure 5 shows a variant according to the present invention of the system of Figure 1;
- Figure 5A shows an element of the system shown in Figure 5 isolated from the rest;
- Figure 6 shows an enlarged detail of the system of Figure 5;
- Figure 7 shows an exploded view of the detail shown in Figure 6;
- Figure 8 shows another variant according to the present invention of the system of Figure 1;
- Figure 8A shows an element of the system shown in Figure 8 isolated from the rest;
- Figure 9 shows an enlarged detail of the system of Figure 8;
- Figure 10 shows an exploded view of the detail shown in Figure 9;
- Figure 11 shows the trend of some signals related to the operation of the system of Figure 8;
- Figure 12 shows a detail of an example, not covered by the present invention, of the system of Figure 1.

### DETAILED DESCRIPTION

The present invention is described here below with reference to specific embodiments illustrated in the attached drawings. However, the present invention is not limited to the specific embodiments illustrated in the following detailed description and represented in the figures; rather, the embodiments described simply exemplify the various aspects of the present invention, the scope of which is defined in the claims. Further modifications and variants of the present invention will be clear for the expert in the art.

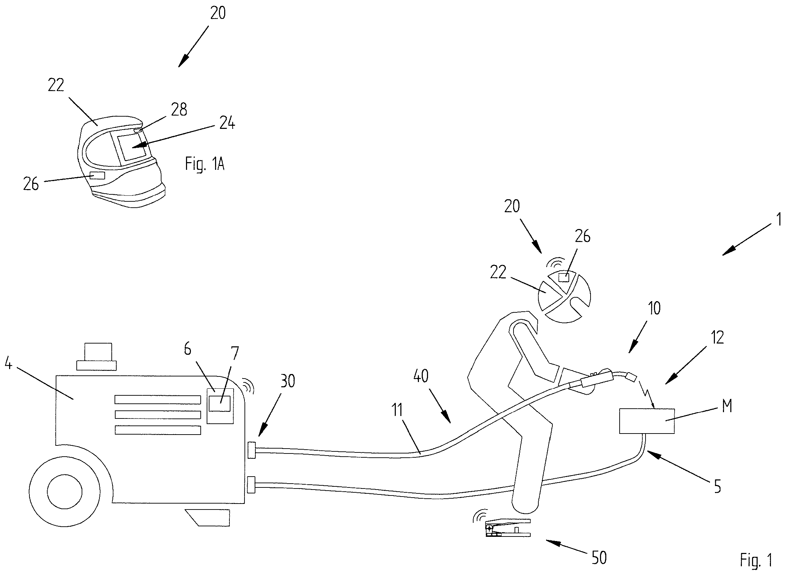

Figure 1 shows a schematic view of a welding and/or cutting system not covered by the present invention.

The welding and/or cutting system according to the present invention may comprise welding machines using technology of the MMA, TIG, MIG/MAG type, plasma or electrode technology, with or without protective gas. Here below, we make reference to a welding system for the sake of simplicity, but what is explained applies also to a cutting system.

The welding system 1 shown in the figure comprises a generator 4, a welding torch 10 (or cutting torch in cutting systems) and a control unit 6. The welding system 1 furthermore comprises an actuator unit 50 designed to be activated by the operator in order to carry out a welding operation (or cutting operation in the case of cutting systems) through the activation of said generator 4. As illustrated in Figure 1, the actuator unit 50 is represented as a single unit, that is activated by the operator with his/her foot, or a pedal.

The operator, as described in greater detail below, activates the actuator unit 50 with his/her foot to carry out the welding operation on the element to be welded M.

The generator 4 is preferably connected to a cylinder containing a protective gas for welding and/or to a cooling circuit (not illustrated).

An earth cable 5 connects the generator 4 to the element to be welded M, while a connection element 40 connects the generator 4 to the torch 10.

The connection element 40 preferably comprises a connector 30, a cable bundle 11, pipes for the passage of water, if there is a cooling circuit for cooling the torch 10, and pipes for the passage of pressurized air, in the case of a plasma cutting torch, or for the passage of a protective gas or gas mixture, if the welding system is designed for the use of the latter.

The cable bundle 11 connects the torch 10 to the connector 30 and the connector 30 connects the cable bundle 11, and thus the torch 10, to the generator 4. The cable bundle 11 comprises one or more power cables for the torch 10, not illustrated in the figure.

The earth cable 5, closing the circuit constituted by the generator 4, the torch 10 and the element to be welded M, allows the start of the welding operations, in particular the striking of the welding arc 12.

In the example not covered by the present invention illustrated in the figure, the control unit 6 is mounted inside the generator 4. The control unit can also be arranged outside the generator and connected to it through a connector. In this case, the control unit can be powered by means of batteries or through the power mains (not illustrated).

Alternatively, the control unit 6 can be mounted in any other position deemed suitable, for example in/on the grip of the torch 10. In this last case, the power supply system for the control unit can be constituted, for example, by one or more rechargeable or non-rechargeable batteries, or equivalent power supply means (not illustrated).

The control unit 6 preferably comprises first wireless signal transmission/reception means 7.

The first transmission/reception means 7 preferably comprise a radio frequency unit. Preferably, said radio frequency unit is of the Bluetooth^{®} or ZigBee or Enocean type.

In a preferred variation, the first transmission/reception means 7 preferably comprise an infrared unit.

The first transmission/reception means 7 allow data and/or information to be transferred to the other components of the welding system 1 and/or to any other external device comprising Bluetooth^{®} or ZigBee or Enocean technology, for example a tablet or a similar device.

According to Figure 1, the welding system 1 comprises a protection unit 20 comprising a protective helmet 22 designed to be worn by the operator while welding. As better illustrated in Figure 1A, the protection unit 20, furthermore, comprises a protection shield 24, preferably an LCD filter, and second wireless signal transmission/reception means 26.

The protection unit 20, furthermore, preferably comprises optical sensors 28 designed to detect the light intensity in the spectrum of visible light and of infrared light.

The second transmission/reception means 26 preferably comprise a radio frequency unit. Preferably, said radio frequency unit is of the Bluetooth^{®} type.

The second transmission/reception means 26 allow data and/or information to be transferred from the protection unit 20 to the other components of the welding system and/or to any other external device comprising Bluetooth^{®} or ZigBee or Enocean technology, for example a tablet, gateway or a similar device. For example, the second transmission/reception means 26 allow data and/or information to be transferred from or towards the first transmission/reception means 7.

The protection unit 20 preferably comprises a power supply unit (not shown). The power supply unit preferably comprises rechargeable or non-rechargeable batteries and/or solar cells.

The protection unit 20 is suited to protect the operator's eyes from the dangerous radiation produced by the welding arc 12 during the welding operations. This is obtained by conveniently darkening the protection shield 24.

The LCD filter is preferably constituted by several layers comprising Polaroid sheets, glass and LCD. An LCD filter provides for filtering and attenuating light at certain wavelengths and, by changing the control voltage Vc applied to it, it is possible to vary the degree of filtering/attenuation of light for the different wavelengths, in particular for the wavelengths in the visible spectrum. The degree of darkening (darkening means the filtering and/or attenuation of radiation at a certain wavelength) ensured by an LCD filter is measured in DIN degrees.

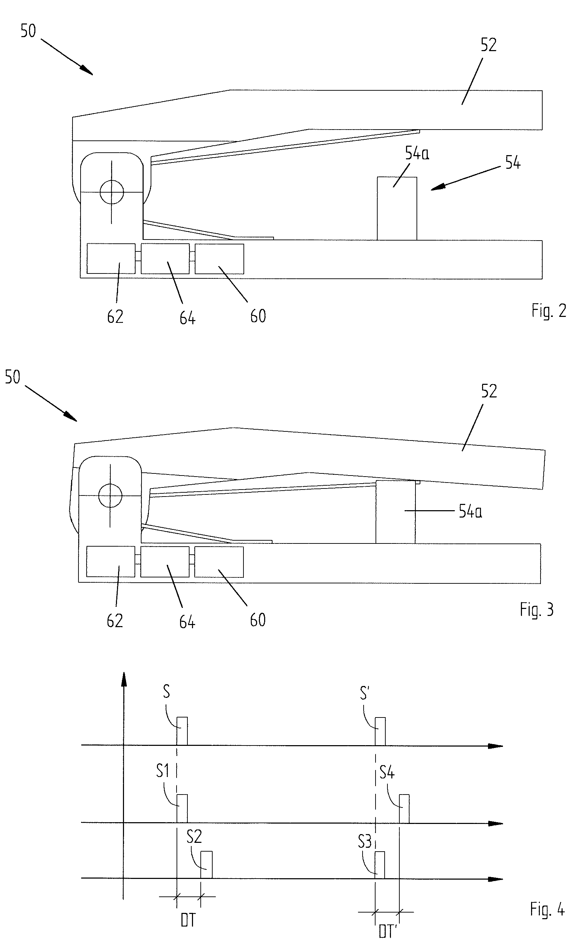

As shown in Figure 2, the actuator unit 50 comprises a movable actuator element 52 suited to be activated by the operator, first generation means 54 suited to generate a signal S, a control unit 60 for the acquisition of the signal S generated by the first generation means 54, transmission means 62 suited to transmit wireless signals and a power supply unit 64.

The movable actuator element 52 preferably comprises a lever 52 suited to be rotated around its fulcrum.

In variant cases, said movable element can be made in a different way, for example it can be a linear button.

The transmission means 62 preferably communicate with the first transmission/reception means 7 of the control unit 6 and with the second transmission/reception means 26 of the protection unit 20.

The transmission means 62 preferably comprise a radio frequency unit. Preferably, said radio frequency unit is of the Bluetooth^{®} or ZigBee or Enocean type.

In a preferred variation, the first transmission/reception means 62 preferably comprise an infrared unit.

According to the present invention, the power supply unit 64, or self-powering unit, preferably comprises an electric energy generator, more preferably an induction generator.

Said electric energy generator advantageously transforms the mechanical energy deriving from the movement of the movable element 52 into electric energy.

The electric energy generator 64 transforms the mechanical energy deriving from the movement of the movable element 52, which causes a magnetic flow variation in a winding, into electric energy. Preferably, the electric energy generated in the form of a voltage pulse is rectified and made available to a voltage regulator, so that it can be used as power supply voltage.

According to the present invention, during the activation of the movable element 52 a voltage pulse is generated that is capable of supplying power to the control unit 60 and the transmission means 62. Preferably, during the activation of the movable element 52 a voltage pulse is generated, which is rectified and made available to a voltage regulator for the purpose of supplying power to the control unit 60 and the transmission means 62.

Analogously, and according to the present invention, during the release of the movable element 52 a voltage pulse is generated that is capable of supplying power to the control unit 60 and the transmission means 62.

Preferably, during the release of the movable element 52 a voltage pulse is generated, which is rectified and made available to a voltage regulator for the purpose of supplying power to the control unit 60 and the transmission means 62. The first generation means 54 are preferably shaped in such a way that they can be activated by the movable element 52 during its movement.

According to the actuator unit 50 shown in Figure 2, the first generation means 54 comprise a first switch 54a. Preferably, the first switch 54a is a switch of the mechanical type.

The first switch 54a is activated by contact at the end of a first stroke of the movable element 52 (as shown in Figure 3).

In variant embodiments, the switch and its activation may be of a different type, for example a reed magnetic switch or a Hall effect switch.

In a preferred case related to the trend of the signals of Figure 4, following the activation of the first switch 54a, the actuator unit 50 generates a pulse signal S that is transmitted by the transmission means 62.

The signal S preferably comprises informative content (data/bytes) related to the operation of activation of the first switch 54a.

The signal S is received by the protection unit 20 through the second transmission/reception means 26. Said signal S is processed to define a signal S1 for the darkening of the protection screen 24 and, if necessary, for other actions intended to modify the filter parameters, for example the increase/decrease of sensitivity/DIN degrees.

The same signal S is received through the first transmission/reception means 7 of the control unit 6. Said signal S is processed to define a second signal S2 intended to activate the generator 4 for the generation of the welding arc 12 at the level of the torch 10. The second signal S2 is advantageously generated by the control unit 6 after the introduction of a predetermined delay DT, as shown in Figure 4.

Advantageously, thanks to the delay DT between the first signal S1 and the second signal S2, the activation of the generator 4 with the generation of the arc 12 takes place with a predetermined delay, for example a delay DT of 15 tenths of a second, with respect to the activation of the protection unit 20 and in particular with respect to the darkening of the protection shield 24. This ensures that at the moment of the beginning of the welding operation with the striking of the arc 12 the protective action for the operator's eyes is active.

The welding step then continues with the protection unit 20 and the generator 4 activated until the movable element 52 of the actuator unit 50 is released (release of the pedal).

Following the release of the first switch 54a, the actuator unit 50 generates a pulse signal S' that is transmitted by the transmission means 62.

The signal S' preferably comprises informative contents (data/bytes) related to the operation of release of the first switch 54a.

The signal S' is received through the first transmission/reception means 7 of the control unit 6. Said signal S' is processed to generate a third signal S3 intended to stop the generator 4 for the purpose of interrupting the welding arc 12.

The same signal S' is received also by the protection unit 20 through the second transmission/reception means 26. Said signal S' is processed to generate a fourth signal S4 intended to deactivate the protection unit 20. The fourth signal S4 is advantageously generated after the introduction of a predetermined delay DT. Advantageously, it is ensured that the protection unit 20 is deactivated once the welding arc 12 has been interrupted, thus guaranteeing that the operator's eyes are protected, for example with a delay DT' of 20-30 milliseconds.

In a variant embodiment of the invention, following the activation of the first switch 54a, the actuator unit 50 itself generates two pulse signals S1, S2 in sequence, one of which is delayed with respect to the other (for example, generating the two signals S1 and S2 as illustrated in Figure 4, one with a delay DT with respect to the other).

The first signal S is transmitted by the transmission means 62 and received by the protection unit 20 through the second transmission/reception means 26. Said signal S1 is processed to define a corresponding signal for the darkening of the protection shield 24.

The second signal S2 is transmitted by the transmission means of the actuator unit 50 and received through the first transmission/reception means 7 of the control unit 6. Said signal S is processed to generate a corresponding signal intended to activate the generator 4 for the generation of the welding arc 12 at the level of the torch 10.

Advantageously, and analogously to what has been described above, thanks to the delay DT between the first signal S1 and the second signal S2 introduced directly by the actuator unit 50, the activation of the generator 4 with the generation of the arc 12 takes place with a predetermined delay, for example a delay DT of 15 tenths of a second, with respect to the activation of the protection unit 20 and in particular with respect to the darkening of the protection shield 24. This ensures that at the moment of the beginning of the welding operation with the striking of the arc 12 the protective action for the operator's eyes is active.

In a further variant embodiment of the invention, following the activation of the first switch 54a, the actuator unit 50 generates a pulse signal S".

The second signal S" is transmitted by the transmission means 62 of the actuator unit 50 and received through the first transmission/reception means 7 of the control unit 6. Said signal S" is transmitted by the control unit 6 to the protection unit 20 through the first transmission/reception means 7. The signal received by the protection unit 20 is processed to define a corresponding signal for the darkening of the protection shield 24.

Following the darkening step, the protection unit 20 sends the control unit 6 a signal indicating that the darkening step has been completed.

The control unit 6, which receives said signal indicating that the darkening step has been completed, can generate a signal intended to activate the generator 4 for the generation of the welding arc 12 at the level of the torch 10.

In this way, it is ensured that the generation of the welding arc 12 takes place after the darkening of the shield 24.

Therefore, according to the above, the generation and the management of the signals guarantee that the operator is never exposed to the light intensity of the arc.

Furthermore, to advantage, the presence of wireless transmission devices makes it possible to avoid the presence of buttons and/or signal cables between the generator 4 and the torch 10, reducing the complexity and the size of the cable bundle 11 compared to the systems of the known type, ensuring that the torch 10 is easier to handle, simplifying the assembly process of the cable bundle 11 and/or of the torch 10, reducing the failures due to the breakage of the cables during normal use.

It should also be stated that a further embodiment of the actuator unit, in addition to including the primary function of darkening of the shield before the striking of the welding arc as just described above, may also be provided with further signal generation means, for example a selector or one or more switches and/or one or more buttons located on the actuator unit itself. On activation of said further signal generation means, the content of the signal S in data/bytes is diversified, in such a way that it can be interpreted by the receiving control unit and that the same is allowed, in turn, to generate the signal S 1 for the purpose of carrying out secondary functions such as the adjustment of system parameters, for example the increase/decrease of the welding current, the increase/decrease of the DIN darkening degree of the protection shield.

To advantage, thanks to the presence of an independent energy generator, the actuator unit carried out according to the invention does not make use of batteries or other external power sources. Still to advantage, by avoiding the use of specific batteries, the actuator unit carried out according to the invention reduces the costs related to the use of the product during its life as well as its environmental impact.

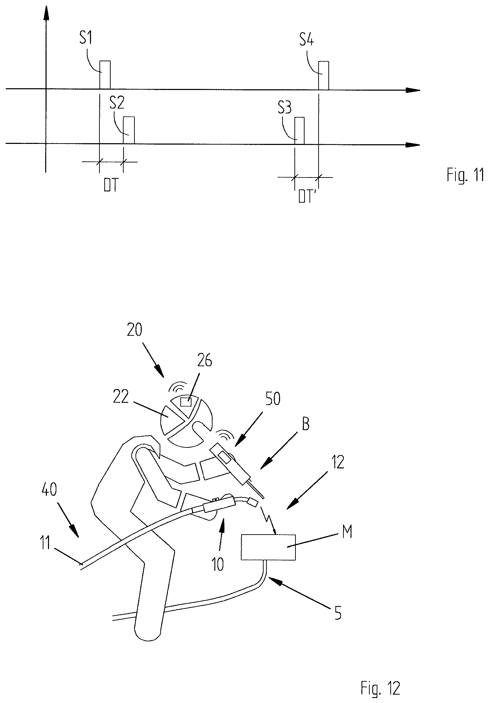

In a further configuration of the actuator unit 50, schematically shown in Figure 12 and related in particular to applications in welding systems of the TIG type, the actuator unit 50 can be configured in such a way that it can be activated with one's hand and/or fingers (for example, the left hand). In this configuration, the actuator unit 50 can be coupled with the "filler rod" B used with the weld material, in such a way as to allow the operator to start the welding machine and add the weld material using one hand only (for example, the left hand). In this configuration, the welding torch 10 can be without controls and can be comfortably handled by the operator with the other hand (for example, the right hand).

The actuator unit 50 preferably introduces in each signal transmitted, for example the activation signal S or the release signal S' described above, a univocal identification code, for example a pre-programmed code, which may consist of one or more bytes, or a byte packet, or even a single bit.

The protection unit 20 and the control unit 6 of the generator 4 will be provided with a special function that makes it possible to associate/store said identification code of the actuator unit 50 in such a way as to be able to decode only the signals S, S' transmitted by that specific actuator unit 50 (and not by any other actuator units of other systems located nearby).

According to another configuration of the actuator unit, the same contains a communication interface of the NFC (near field communication) type, which makes it possible to carry out maintenance, reprogramming or customized authorization operations through a special device, for example a smart device, a tablet, a mobile phone.

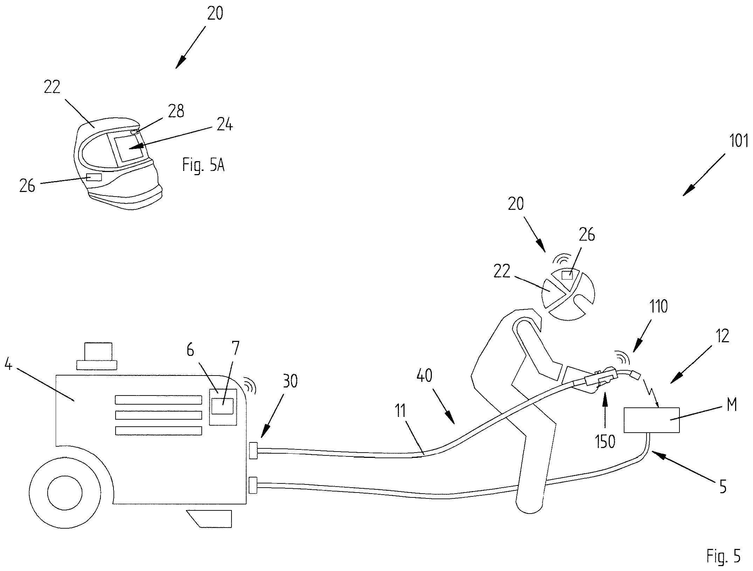

Figure 5 shows a variant embodiment 101 of the system that is the subject of the invention.

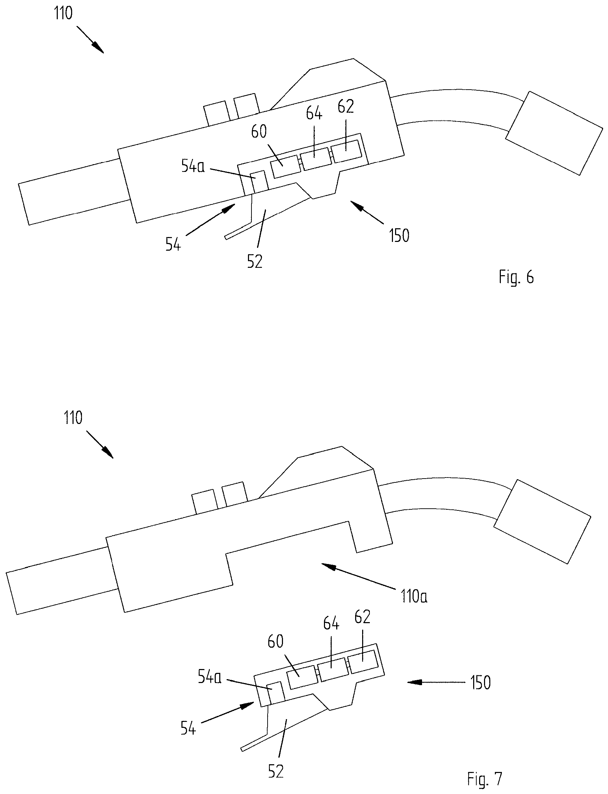

Said embodiment differs from the embodiment illustrated and described with reference to Figure 1 in that the actuator unit 150, better illustrated in Figures 6 and 7, is not in the shape of a pedal but is associated with/built in the torch 110 and is advantageously suited to be activated by the operator with his/her hand and/or fingers.

The component parts equivalent to those present in the preferred embodiment described above are identified by the same reference numbers.

The actuator unit 150 comprises a movable actuator element 52 suited to be activated by the operator, first generation means 54 suited to generate a signal S, a control unit 60 for the acquisition of the signal S generated by the first generation means 54, transmission means 62 suited to transmit wireless signals and a power supply unit 64.

The movable actuator element 52 preferably comprises a lever 52 suited to be rotated around its fulcrum.

The operation of said system 101 and of the actuator unit 150 is the same as described above with reference to Figures from 1 to 4, with the only difference that the movable element 52 is activated by the hand and/or fingers of the operator instead of by his/her foot.

Therefore, also this embodiment offers the advantages and achieves the objects described above.

It should be noted that in a preferred embodiment the actuator unit 150 can be made in such a way as to be integral with the torch 110.

In a variant according to the present invention, the actuator unit 150 can be made as an independent unit suited to be applied, for example snap-fitted, into a suitable seat 110a provided in the torch 110, as shown for example in Figure 7. This facilitates the maintenance and/or replacement operations required by the actuator unit 150.

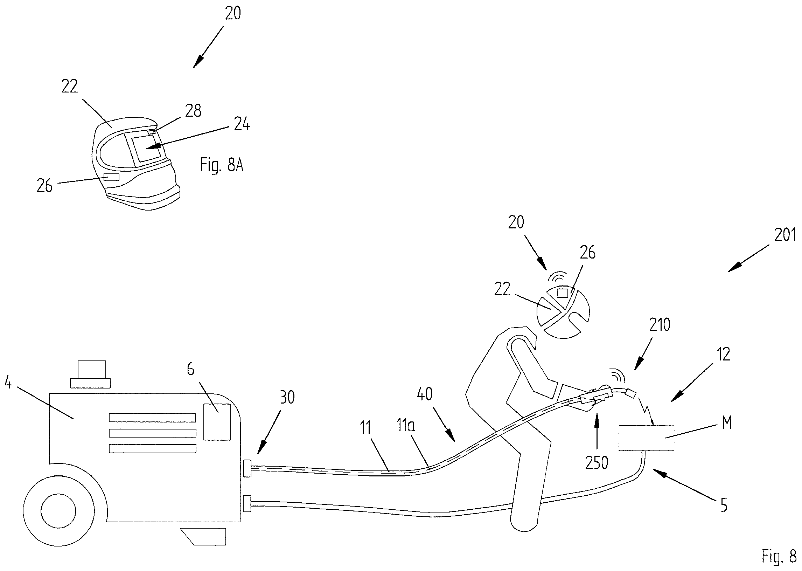

Figure 8 shows a schematic view of a welding and/or cutting system 201 according to another embodiment of the present invention.

The component parts equivalent to those present in the preferred embodiment described above are identified by the same reference numbers.

The welding system 201 shown in the figure preferably comprises a generator 4, a welding torch 210 (or cutting torch in cutting systems) and a control unit 6.

The welding system 1 furthermore comprises an actuator unit 250 designed to be activated by the operator in order to carry out a welding operation (or cutting operation in the case of cutting systems) through the activation of said generator 4.

In the embodiment illustrated in Figure 8, the actuator unit 250 is according to the present invention associated with the torch 210 and can be activated by the operator with his/her hand and/or fingers in order to carry out the welding operation on the element to be welded M.

The generator 4 is preferably connected to a cylinder containing a protective gas for welding and/or to a cooling circuit (not illustrated).

An earth cable 5 connects the generator 4 to the element to be welded M, while a connection element 40 connects the generator 4 to the torch 210.

The connection element 40 preferably comprises a connector 30, a cable bundle 11, pipes for the passage of water, if there is a cooling circuit for cooling the torch 210, and pipes for the passage of pressurized air, in the case of a plasma cutting torch, or for the passage of a protective gas or gas mixture, if the welding system is designed for the use of the latter.

The cable bundle 11 connects the torch 210 to the connector 30 and the connector 30 connects the cable bundle 11, and thus the torch 210, to the generator 4. The cable bundle 11 comprises one or more control cables 11a suited to activate the generator 4 and connected to the actuator unit 250. Advantageously, the cable bundle 11 is without power cables for the actuator unit 250.

By closing the circuit constituted by the generator 4, the torch 210 and the element to be welded M, the earth cable 5 allows the start of the welding operations.

In the embodiment illustrated in the figure, the control unit 6 is mounted inside the generator 11.

According to the embodiment illustrated, the welding system 1 comprises a protection unit 20 comprising a protective helmet 22 designed to be worn by the operator while welding, as better illustrated in Figure 8A.

The description provided with reference to the previous embodiments applies to the protection unit 20.

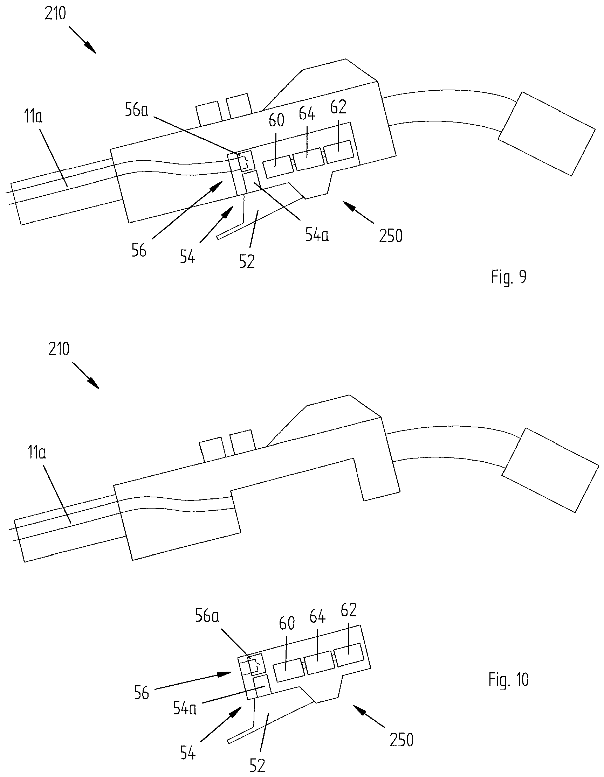

In this embodiment and as shown in Figure 9, the actuator unit 250 comprises a movable actuator element 52 suited to be activated by the operator, first generation means 54 suited to generate a first signal S1, as shown in Figure 11, a control unit 60 for the acquisition of the first signal S1 generated by the first generation means 54, transmission means 62 suited to transmit wireless signals and a power supply unit 64.

The transmission means 62 preferably communicate with the transmission/reception means 26 of the protection unit 20.

The movable actuator element 52 preferably comprises a lever 52 suited to be rotated around its fulcrum.

In variant embodiments, said movable element can be made in a different manner, for example it can be a linear push button, as better illustrated also below with reference to preferred variant embodiments.

The description provided with reference to the previous configurations applies to the construction of the transmission means 62 and the power supply unit 64.

More specifically, during the activation of the movable element 52 a voltage pulse is generated that is capable of supplying power to the control unit 60 and to the transmission means 62 for the transmission of the first signal S1 to the protection unit 20.

Analogously, during the release of the movable element 52 a voltage pulse is generated that is capable of supplying power to the control unit 60 and to the transmission means 60 for the transmission of a release signal S4 to the protection unit 20.

The actuator unit 250 comprises also second generation means 56 suited to generate a second signal S2. The second generation means 56 communicate with the control cables 11a designed to activate the generator 4.

According to an aspect of this embodiment, the first generation means 54 and the second generation means 56 are configured in such a way that they can be activated in sequence by the movable element 52 during its movement, in such a way that the second signal S2 is generated with a delay DT with respect to the first signal S1 (as indicated in Figure 11).

In a preferred embodiment based on the system 201 shown in Figure 8 and described, the first signal S1 is acquired by the control unit 60 and transmitted to the protection unit 20 through the transmission means 62. The second signal S2, with the delay DT, instead, is acquired by the control unit 6 of the generator through the control cables 11a.

The first signal S1 preferably comprises informative contents (data/bytes) related to the operation of activation of the first switch 54a.

The first signal S1 is received by the protection unit 20 through the second transmission/reception means 26. Said first signal S is processed to define a signal S1 for the darkening of the protection shield 24 and, if necessary, for other actions intended to modify the filter parameters, for example the increase/decrease of sensitivity/DIN degrees.

It should also be stated that a further embodiment of the actuator unit, in addition to including the primary function of darkening of the shield before the striking of the welding arc as just described above, may also be provided with further signal generation means, for example a selector or one or more switches and/or one or more buttons located on the actuator unit itself. On activation of said further signal generation means, the contents of the signal S in data/bytes is diversified, in such a way that it can be interpreted by the receiving control unit and that the same is allowed, in turn, to generate the signal S1 for the purpose of carrying out secondary functions such as the adjustment of system parameters, for example the increase/decrease of the welding current, the increase/decrease of the DIN darkening degree of the protection shield.

Advantageously, thanks to the delay DT introduced between the first signal S1 and the second signal S2 by the actuator unit 250, the activation of the generator 4 with the generation of the arc 12 takes place with a predetermined delay, for example a delay DT of 15 hundredths of a second, with respect to the activation of the protection unit 20 and in particular with respect to the darkening of the protection shield 24. This ensures that at the moment of the beginning of the welding operation with the striking of the arc 12 the protective action for the operator's eyes is active.

Therefore, the management of the two signals S1, S2 takes place directly and in a simple manner through the actuator unit 250, which automatically generates the two signals S1, S2 in sequence with the desired predetermined delay DT.

According to the preferred embodiment illustrated in Figure 9, the first generation means 54 comprise a first switch 54a and the second generation means 56 comprise a second switch 56a. Preferably, the first switch 54a and the second switch 56a are switches of the mechanical type. Preferably, the first switch 54a and the second switch 56a are aligned with respect to the direction of movement of the movable element 52.

The first switch 54a is activated by contact at the end of a first stroke of the movable element 52 and the second switch 56a is activated at the end of a second stroke of the movable element 52, said second stroke being longer than said first stroke.

It should be noted that the expression "first stroke" defines the extent of the movement of the movable element 52 from its rest position to the position of activation of the first switch 54a, and the expression "second stroke" defines the extent of the movement of the movable element 52 from its rest position to the position of activation of the second switch 56a.

In variant embodiments, the switches and their activation may be of a different type, for example reed magnetic switches or Hall effect switches.

Following the activation of the movable element 52, therefore, the welding operation is started, the operator's eyes being protected by the protection unit 20. During the welding step, the control unit 6 detects that the movable element 52 is active through the control cables 11a and consequently manages the system 201 in such a way as to maintain the generator 4 activated for the generation of the arc 12 while the protection unit is active.

This operating condition continues as long as the operator does not release the movable element 52.

When the operator releases the movable element 52 in order to end the welding operation, the second switch 56a and the first switch 54a are deactivated in sequence, with a delay DT' (essentially corresponding to the delay DT introduced during the activation step). The deactivation of the second switch 56a is indicated in Figure 11 as a third pulse signal S3 and the deactivation of the first switch 54a is indicated as a fourth pulse signal S4.

The control unit 6 that acquires the third signal S3 through the control cables 11a acts by interrupting the generator 4 and thus the welding arc 12.

The fourth signal S4 preferably comprises informative contents (data/bytes) related to the operation of release of the first switch 54a.

The fourth signal S4 is received by the protection unit 20 through the transmission/reception means 26. Said fourth signal S4 is processed to define a deactivation signal S4 intended to deactivate the protection unit 20. Advantageously, it is ensured that the protection unit 20 is deactivated once the welding arc 12 has been interrupted, thus guaranteeing that the operator's eyes are protected.

Therefore, according to the above, the generation and the management of the signals guarantee that the operator is never exposed to the light intensity of the arc.

Furthermore, to advantage, the establishment of wireless transmission between the actuator unit 250 and the protection unit 20 and the presence of an independent electric energy generator make it possible to avoid the presence of power cables for the actuator unit 250 between the generator 4 and the torch 210, reducing the complexity and the size of the cable bundle 11 compared to the systems of the known type, ensuring that the torch 210 is easier to handle, simplifying the assembly process of the cable bundle 11 and/or of the torch 210, reducing the failures due to the breakage of the cables during normal use. Advantageously, thanks to the presence of an autonomous energy generator, the actuator unit 250 carried out according to the invention does not use batteries or other external energy sources. Still to advantage, by avoiding the use of specific batteries, the actuator unit carried out according to the invention reduces the costs related to the use of the product during its life as well as its environmental impact.

According to a further aspect of the actuator unit 250, the same preferably introduces a univocal identification code, for example a specific byte, preferably programmed in the factory, inside each signal transmitted, for example inside the activation signal S 1 or the release signal S4 described above.

The protection unit 20 will be provided with a special function that makes it possible to associate/store said identification code of the actuator unit 250 in such a way as to be able to decode only the signals S1, S4 generated by that specific actuator unit 250 (and not by any other actuator units of other systems located nearby).

In a preferred variant embodiment, the deactivation of the protection unit is not obtained through a specific deactivation signal but takes place automatically, wherein the protection unit is advantageously provided with optical sensors 28. In this case, the deactivation of the protection unit 20 takes place after the extinction of the welding arc 12, when the optical sensors 28 detect a radiation value that is below a given level.

Preferably, and in order to achieve a higher level of safety, the deactivation of the protection unit 20 depends on the detecting action of said optical sensors 28, while any deactivation signal received, for example the deactivation signal S4, is ignored by the protection unit 20 itself.

Consequently, the invention is not limited to the embodiments described above but is limited only by the scope of protection defined by the attached claims.

## Claims

1. Welding and/or cutting system (101; 201), comprising a generator (4),
a welding and/or cutting torch (1; 110; 210).
a control unit (6) and
an actuator unit (150; 250) suited to be activated by an operator for the purpose of carrying out a welding and/or cutting operation through the activation of said generator (4), wherein said actuator unit (150; 250) comprises:
- a movable actuator element (52), suited to be activated by said operator;
- first generation means (54) suited to generate a signal (S1; S") and activated by said movable element (52);
said actuator unit (150 ; 250) is associated to said welding and/or cutting torch ( 110 ; 210), the actuator unit (150 ; 250) being configured in such a way that it can be activated with one's hand and/or fingers;
**characterized in that**
said actuator unit (50; 150; 250) further comprises
- wireless signal transmission unit (62);
a power supply unit (64) suited to power said transmission unit (62), said power supply unit (64) comprising an electric energy generator,
and **in that** said actuator unit (150; 250) is associated to said welding and/or cutting torch (110; 210), and
said electric energy generator transforms the mechanical energy produced by the movement of said movable element (52), which causes a variation in the magnetic flow in a winding, into electric energy,
**wherein** during activation of the movable actuator element (52) a voltage pulse is generated that is capable of supplying power to the control unit (6) and to the wireless signal transmission unit (62),
**wherein** during release of the movable actuator element (52) a voltage pulse is generated that is capable of supplying power to the control unit (6) and to the wireless signal transmission unit (62).

2. System (101; 201) according to claim 1, **characterized in that** said electric energy generator comprises an induction generator.

3. System (101; 201) according to any of the preceding claims, **characterized in that** said system (101; 201) furthermore comprises a protection unit (20) for said operator, comprising a protection shield (24), preferably an LCD filter.

4. System (101; 201) according to claim 3, **characterized in that** said protection unit (20) can be activated through an activation signal.

5. System (101; 201) according to claim 3 or 4, **characterized in that** said protection unit (20) comprises a receiver unit (26) suited to receive wireless signals.

6. System (101; 201) according to any of the preceding claims, **characterized in that** said first generation means (54) are activated by said movable element (52) during its movement, in such a way as to generate a first signal (S).

7. System (101; 201) according to any of the claims from 3 to 6, **characterized in that** said first signal (S1) generated by said actuator unit (150; 250) corresponds to an activation signal intended to activate said protection unit (20).

8. System (201) according to any of the preceding claims, **characterized in that** said actuator unit (250) comprises second generation means (56) suited to generate a signal and activated by said movable element (52), wherein said first generation means (54) and said second generation means (56) are activated in sequence by said movable element (52) during its movement, in such a way that said second generation means (56) generate a second signal (S2) with a predetermined delay (DT) with respect to a first signal (S; S1) generated by said first generation means (54).

9. System (201) according to claim 8, **characterized in that** said first generation means (54) comprise a first switch (54a) and/or said second generation means (56) comprise a second switch (56a).

10. System (201) according to claim 8 or 9, **characterized in that** said first switch (54a) is activated at the end of a first stroke of said movable element (52) and said second switch (56a) is activated at the end of a second stroke of said movable element (52), said second stroke being longer than said first stroke.

11. System (201) according to claim 10, **characterized in that** said first stroke corresponds to the extent of the movement of said movable element (52) from its rest position to the position of activation of said first switch (54a) and the second stroke defines the extent of the movement of said movable element (52) from its rest position to the position of activation of said second switch (56a).

12. System (201) according to any of the claims from 3 to 11, **characterized in that** said first signal (S) generated by said actuator unit (50; 150; 250) corresponds to an activation signal designed to activate said protection unit (20) and said second signal (S2) generated by said actuator unit (50; 150; 250) corresponds to an activation signal designed to activate said generator (4), wherein said protection unit (20) comprises wireless signal transmitter/receiver means (26) and said generator (4) comprises wireless signal transmitter/receiver means (7).

13. System (101; 201) according to any of the preceding claims, **characterized in that** said power supply unit (64) is not provided with batteries and/or external power supply devices.

## Patentansprüche

1. Schweiß- und/oder Schneidsystem (101; 201), umfassend
einen Generator (4),
einen Schweiß- und/oder Schneidbrenner (110; 210),
eine Steuereinheit (6) und
eine Betätigungseinheit (150; 250), die von einer Bedienperson aktiviert werden kann, um durch die Aktivierung des besagten Generators (4) einen Schweiß- und/oder Schneidvorgang auszuführen, wobei die besagte Betätigungseinheit (150; 250) folgende Elemente umfasst:
- ein bewegliches Betätigungselement (52), das von der besagten Bedienperson betätigt werden kann;
- erste Erzeugungsmittel (54), die zur Erzeugung eines Signals (S1; S") geeignet sind und durch das besagte bewegliche Element (52) aktiviert werden;
die besagte Betätigungseinheit (150; 250) ist mit dem besagten Schweiß- und/oder Schneidbrenner (110; 210) verbunden, wobei die Betätigungseinheit (150; 250) so gestaltet ist, dass sie mit der Hand und/oder den Fingern betätigt werden kann;
**dadurch gekennzeichnet, dass:**
die besagte Betätigungseinheit (50; 150; 250) ferner folgende Elemente umfasst:
- eine drahtlose Signalübertragungseinheit (62);
- eine Stromversorgungseinheit (64), die geeignet ist, die besagte Übertragungseinheit (62) zu versorgen, wobei die besagte Stromversorgungseinheit (64) einen Stromgenerator umfasst,
sowie dadurch, dass
die besagte Betätigungseinheit (150; 250) mit dem besagten Schweiß- und/oder Schneidbrenner (110; 210) verbunden ist, und
der besagte Stromgenerator die mechanische Energie, die durch die Bewegung des besagten beweglichen Elements (52) erzeugt wird, die eine Veränderung des magnetischen Flusses in einer Wicklung verursacht, in elektrische Energie umwandelt,
**wobei** während der Aktivierung des beweglichen Betätigungselements (52) ein Spannungsimpuls erzeugt wird, der in der Lage ist, die Steuereinheit (6) und die drahtlose Signalübertragungseinheit (62) mit Strom zu versorgen,
**wobei** während der Freigabe des beweglichen Betätigungselements (52) ein Spannungsimpuls erzeugt wird, der in der Lage ist, die Steuereinheit (6) und
die drahtlose Signalübertragungseinheit (62) mit Strom zu versorgen.

2. System (101; 201) nach Anspruch 1, **dadurch gekennzeichnet, dass** der besagte Stromgenerator einen Induktionsgenerator umfasst.

3. System (101; 201) nach jeglichem der vorhergehenden Ansprüche, **dadurch gekennzeichnet, dass** das System (101; 201) außerdem eine Schutzeinheit (20) für die besagte Bedienperson umfasst, die eine Schutzabschirmung (24), vorzugsweise einen LCD-Filter, umfasst.

4. System (101; 201) nach Anspruch 3, **dadurch gekennzeichnet, dass** die besagte Schutzeinheit (20) durch ein Aktivierungssignal aktiviert werden kann.

5. System (101; 201) nach Patentanspruch 3 oder 4, **dadurch gekennzeichnet, dass** die besagte Schutzeinheit (20) eine Empfängereinheit (26) umfasst, die geeignet ist, drahtlose Signale zu empfangen.

6. System (101; 201) nach jeglichem der vorhergehenden Patentansprüche, **dadurch gekennzeichnet, dass** die ersten Erzeugungsmittel (54) durch das besagte bewegliche Element (52) während seiner Bewegung aktiviert werden, sodass ein erstes Signal (S) erzeugt wird.

7. System (101; 201) nach jeglichem der Patentansprüche 3 bis 6, **dadurch gekennzeichnet, dass** das besagte von der besagten Betätigungseinheit (150; 250) erzeugte erste Signal (S1) einem Aktivierungssignal entspricht, das zur Aktivierung der besagten Schutzeinheit (20) bestimmt ist.

8. System (201) nach jeglichem der vorhergehenden Patentansprüche, **dadurch gekennzeichnet, dass** die besagte Betätigungseinheit (250) zweite Erzeugungsmittel (56) umfasst, die in der Lage sind, ein Signal zu generieren und von dem besagten beweglichen Element (52) aktiviert werden, wobei die besagten ersten Erzeugungsmittel (54) und die besagten zweiten Erzeugungsmittel (56) nacheinander durch das besagte bewegliche Element (52) während seiner Bewegung in der Weise aktiviert werden, dass die besagten zweiten Erzeugungsmittel (54) ein zweites Signal (S2) mit einer festgelegten Verzögerung (DT') in Bezug auf ein erstes Signal (S; S1) erzeugen, das durch die besagten ersten Erzeugungsmittel (54) erzeugt wird.

9. System (201) nach Patentanspruch 8, **dadurch gekennzeichnet, dass** die besagten ersten Erzeugungsmittel (54) einen ersten Schalter (54a) und/oder die besagten zweiten Erzeugungsmittel (56) einen zweiten Schalter (56a) umfassen.

10. System (201) nach Patentanspruch 8 oder 9, **dadurch gekennzeichnet, dass** der besagte erste Schalter (54a) am Ende eines ersten Hubs des besagten beweglichen Elements (52) aktiviert wird und der besagte zweite Schalter (56a) am Ende eines zweiten Hubs des besagten beweglichen Elements (52) aktiviert wird, wobei der besagte zweite Hub länger als der besagte erste Hub ist.

11. System (201) nach Patentanspruch 10, **dadurch gekennzeichnet, dass** der besagte erste Hub dem Ausmaß der Bewegung des besagten beweglichen Elements (52) aus seiner Ruheposition in die Position der Aktivierung des besagten ersten Schalters (54a) entspricht und der zweite Hub das Ausmaß der Bewegung des besagten beweglichen Elements (52) aus seiner Ruheposition in die Position der Aktivierung des besagten zweiten Schalters (56a) definiert.

12. System (201) nach jeglichem der Patentansprüche 3 bis 11, **dadurch gekennzeichnet, dass** das besagte von der besagten Betätigungseinheit (50; 150; 250) erzeugte erste Signal (S) einem Aktivierungssignal zur Aktivierung der besagten Schutzeinheit (20) entspricht und das besagte von der besagten Betätigungseinheit (50; 150; 250) erzeugte zweite Signal (S2) einem Aktivierungssignal entspricht, das dazu bestimmt ist, den besagten Generator (4) zu aktivieren, wobei die besagte Schutzeinheit (20) drahtlose Signal-Sende-/Empfangsmittel (26) umfasst und der besagte Generator (4) drahtlose Signal-Sende-/Empfangsmittel (7) umfasst.

13. System (101; 201) nach jeglichem der vorhergehenden Patentansprüche, **dadurch gekennzeichnet, dass** die besagte Stromversorgungseinheit (64) nicht mit Batterien und/oder externen Stromversorgungseinrichtungen versehen ist.

## Revendications

1. Système de soudage et/ou de coupe (101 ; 201), comprenant
un générateur (4),
une torche de soudage et/ou de coupage (110 ; 210),
une unité de commande (6) et
une unité d'actionnement ( 150 ; 250) indiquée pour être activée par un opérateur dans le but d'effectuer une opération de soudage et/ou de coupe par l'activation dudit générateur (4), où ladite unité d'actionnement (150 ; 250) comprend :
- un élément d'actionnement mobile (52), indiqué pour être activé par ledit opérateur ;
- de premiers moyens de génération (54) indiqués pour générer un signal (S1 ; S") et activés par ledit élément mobile (52) ;
ladite unité d'actionnement (150 ; 250) est associée à ladite torche de soudage et/ou de coupe (110 ; 210), l'unité d'actionnement (150 ; 250) étant configurée de manière à pouvoir être activée avec la main et/ou les doigts ;
**caractérisé en ce que**
ladite unité d'actionnement (50 ; 150 ; 250) comprend en outre
- unité de transmission de signaux sans fil (62) ;
- une unité d'alimentation électrique (64) indiquée pour alimenter ladite unité de transmission (62), ladite unité d'alimentation électrique (64) comprenant un générateur d'énergie électrique, et **en ce que** ladite unité d'actionnement (150 ; 250) est associée à ladite torche de soudage et/ou de coupe (110 ; 210), et
ledit générateur d'énergie électrique transforme l'énergie mécanique produite par le mouvement dudit élément mobile (52), qui provoque une variation du flux magnétique dans un enroulement, en énergie électrique,
**où,** pendant l'activation de l'élément d'actionnement mobile (52), une impulsion de tension est générée qui est capable d'alimenter l'unité de commande (6) et l'unité de transmission de signaux sans fil (62),
**où,** pendant le relâchement de l'élément d'actionnement mobile (52), une impulsion de tension est générée qui est capable d'alimenter l'unité de commande (6) et l'unité de transmission de signaux sans fil (62).

2. Système (101 ; 201) selon la revendication 1, **caractérisé en ce que** ledit générateur d'énergie électrique comprend un générateur à induction.

3. Système (101 ; 201) selon l'une quelconque des revendications précédentes, **caractérisé en ce que** ledit système (101 ; 201) comprend en outre une unité de protection (20) pour ledit opérateur, comprenant un écran de protection (24), de préférence un filtre LCD.

4. Système (101 ; 201) selon la revendication 3, **caractérisé en ce que** ladite unité de protection (20) peut être activée par un signal d'activation.

5. Système (101 ; 201) selon la revendication 3 ou 4, **caractérisé en ce que** ladite unité de protection (20) comprend une unité réceptrice (26) indiquée pour recevoir des signaux sans fil.

6. Système (101 ; 201) selon l'une quelconque des revendications précédentes, **caractérisé en ce que** lesdits premiers moyens de génération (54) sont activés par ledit élément mobile (52) lors de son déplacement, de manière à générer un premier signal (S).

7. Système (101 ; 201) selon l'une quelconque des revendications de 3 à 6, **caractérisé en ce que** ledit premier signal (S1) généré par ladite unité d'actionnement (150 ; 250) correspond à un signal d'activation destiné à activer ladite unité de protection (20).

8. Système (201) selon l'une quelconque des revendications précédentes, **caractérisé en ce que** ladite unité d'actionnement (250) comprend un deuxième moyen de génération (56) indiqué pour générer un signal et activé par ledit élément mobile (52), où lesdits premiers moyens de génération (54) et lesdits deuxièmes moyens de génération (56) sont activés en séquence par ledit élément mobile (52) pendant son mouvement, de manière à ce que lesdits deuxièmes moyens de génération (56) génèrent un deuxième signal (S2) avec un retard prédéterminé (DT) par rapport à un premier signal (S ; S1) généré par lesdits premiers moyens de génération (54).

9. Système (201) selon la revendication 8, **caractérisé en ce que** lesdits premiers moyens de génération (54) comprennent un premier commutateur (54a) et/ou lesdits deuxièmes moyens de génération (56) comprennent un deuxième commutateur (56a).

10. Système (201) selon la revendication 8 ou 9, **caractérisé en ce que** ledit premier commutateur (54a) est activé à la fin d'une première course dudit élément mobile (52) et ledit deuxième commutateur (56a) est activé à la fin d'une deuxième course dudit élément mobile (52), ladite deuxième course étant plus longue que ladite première course.

11. Système (201) selon la revendication 10, **caractérisé en ce que** ladite première course correspond à l'ampleur du mouvement dudit élément mobile (52) de sa position de repos à la position d'activation dudit premier commutateur (54a) et la deuxième course définit l'ampleur du mouvement dudit élément mobile (52) de sa position de repos à la position d'activation dudit deuxième commutateur (56a).

12. Système (201) selon l'une quelconque des revendications de 3 à 11, **caractérisé en ce que** ledit premier signal (S) généré par ladite unité d'actionnement (50 ; 150 ; 250) correspond à un signal d'activation conçu pour actionner ladite unité de protection (20) et ledit deuxième signal (S2) généré par ladite unité d'actionnement (50 ; 150 ; 250) correspond à un signal d'activation conçu pour actionner ledit générateur (4), où ladite unité de protection (20) comprend des moyens d'émission/réception de signaux sans fil (26) et ledit générateur (4) comprend des moyens d'émission/réception de signaux sans fil (7).

13. Système (101 ; 201) selon l'une quelconque des revendications précédentes, **caractérisé en ce que** ladite unité d'alimentation électrique (64) n'est pas pourvue de batteries et/ou de dispositifs d'alimentation électrique externes.
